# EUROPEAN PATENT APPLICATION

(11) **EP 4 682 395 A1**
(43) Date of publication of application: **21.01.2026**
(21) Application number: 25186911.1
(22) Date of filing: 02.07.2025
(51) Int. Cl.: F16D 59/00, F16D 127/00, F16D 127/02

(54) **SPEED CONTROL DEVICE AND VEHICLE**

(30) Priority: 19.07.2024 JP 2024116189
(71) Applicant: Nabtesco Corporation, Tokyo 102-0093 (JP)
(72) Inventor: Nishida, Yuhei, Tokyo, 102-0093 (JP)
(74) Representative: Grünecker Patent- und Rechtsanwälte PartG mbB

(57) **Abstract**

An aspect of the present invention provides a speed control device (1) including: a brake drum (11) integrated with an axle (2), the brake drum (11) having a cylindrical portion (11b); a brake shoe (23) configured to be displaced and brought into contact with an inner circumferential surface of the cylindrical portion (11b) when acted upon by centrifugal force resulting from rotation of a wheel, to control rotation of the wheel; and a limiting protrusion (25d) configured to limit displacement of the brake shoe (23).

## Description

### TECHNICAL FIELD

The present invention relates to a speed control device and a vehicle.

### BACKGROUND

In the conventional art, a vehicle such as a rollator used to assist a user in walking may be equipped with a speed control device (a retardation wheel) for controlling the rotation speed of the wheels of the vehicle (see, for example, Patent Literature 1). The speed control device has a brake drum integrated with the wheel, a gear plate rotatably installed on the axle that supports the wheel, a brake shoe installed on the gear plate such that it can swing, a compression spring (an elastic member) in contact with the brake shoe and configured to apply an elastic force to the brake shoe, and a cam configured to adjust the pressing force applied by the compression spring to the brake shoe.

In the above-described speed control device, as the wheel is rotated, the brake shoe is subjected to centrifugal force. The brake shoe then overcomes the spring force applied by the compression coil spring and swings, so that the brake shoe is pressed against the inner circumferential surface of the brake drum. The resulting frictional resistance can serve to prevent the wheel from rotating faster than desired. In other words, the speed control device is activated in response to the rotation of the wheel. In other words, the rotation of the wheel determines whether or not the speed control device is activated.
The value of the wheel rotation speed that can activate the speed control device can be controlled by the compression spring and cam. Specifically, as the cam increases the pressing force applied by the compression spring to the brake shoe, this accordingly makes it more difficult for the brake shoe to swing. In this way, the speed control device can be activated at different timings depending on the rotation speed of the wheel.

### RELEVANT REFERENCE

### LIST OF RELEVANT PATENT LITERATURE

Patent Literature 1: Japanese Patent Application Publication No. 2022-59838

### SUMMARY

In recent years, some users of the vehicles equipped with speed control devices have requested that they be able to use the vehicles with the speed control devices being deactivated. In the conventional art described above, however, it is possible to change the timing when the speed control device is activated depending on the rotation speed of the wheel, but it is difficult to keep the speed control device deactivated.

The present invention aims to provide a speed control device that is capable of remaining deactivated, and also provide a vehicle having the speed control device.

An aspect of the present invention provides a speed control device for controlling rotation speed of a rotating body rotatably supported by a shaft. The speed control device includes: a brake drum integrated with the shaft, the brake drum having a tubular portion; a brake shoe configured to be displaced and brought into contact with an inner circumferential surface of the tubular portion when acted upon by centrifugal force resulting from rotation of the rotating body; and a limiting portion configured to limit displacement of the brake shoe. Here, the brake shoe controls rotation of the rotating body.

In the implementation, the limiting portion can limit the displacement of the brake shoe. This can prevent the brake shoe from contacting the inner circumferential surface of the tubular portion regardless of the rotation speed of the rotating body. In this manner, the speed control device can remain deactivated.

The above-described speed control device includes: a compression spring in contact with the brake shoe; a support portion provided on the compression spring on an opposite side to the brake shoe, the support portion supporting the compression spring; and a shift portion configured to displace the support portion in such a direction that the compression spring is compressed in order to reduce a pressing force applied by the brake shoe to the tubular portion, the shift portion being configured to displace the support portion in such a direction that the compression spring is elongated. The compression spring controls a displacement of the brake shoe by applying an elastic force to the brake shoe. The shift portion increases a pressing force applied by the brake shoe to the tubular portion. The limiting portion includes a protrusion protruding from the support portion toward the brake shoe, the support portion and the brake shoe opposing each other with the compression spring being sandwiched therebetween. The protrusion contacts the brake shoe and prevents displacement of the brake shoe if a displacement of the support portion in the direction in which the compression spring is compressed reaches a certain quantity.

The above-described speed control device includes: a compression spring in contact with the brake shoe; a support portion provided on the compression spring on an opposite side to the brake shoe, the support portion supporting the compression spring; and a shift portion configured to displace the support portion in such a direction that the compression spring is compressed in order to reduce a pressing force applied by the brake shoe to the tubular portion, the shift portion being configured to displace the support portion in such a direction that the compression spring is elongated. The compression spring controls a displacement of the brake shoe by applying an elastic force to the brake shoe. The shift portion increases a pressing force applied by the brake shoe to the tubular portion. The limiting portion includes a protrusion protruding from the brake shoe toward the support portion, the support portion and the brake shoe opposing each other with the compression spring being sandwiched therebetween. The protrusion contacts the support portion and prevents displacement of the brake shoe if a displacement of the support portion in the direction in which the compression spring is compressed reaches a certain quantity.

The above-described speed control device includes: a compression spring in contact with the brake shoe; a support portion provided on the compression spring on an opposite side to the brake shoe, the support portion supporting the compression spring; and a shift portion configured to displace the support portion in such a direction that the compression spring is compressed in order to reduce a pressing force applied by the brake shoe to the tubular portion, the shift portion being configured to displace the support portion in such a direction that the compression spring is elongated. The compression spring controls a displacement of the brake shoe by applying an elastic force to the brake shoe. The shift portion increases a pressing force applied by the brake shoe to the tubular portion. The limiting portion includes a protrusion provided on the shift portion. The protrusion contacts the brake shoe and prevents displacement of the brake shoe if the shift portion is operated such that a displacement of the support portion in the direction in which the compression spring is compressed reaches a certain quantity.

In the implementation, the shift portion includes a cam configured to rotate about an axis of rotation of the rotating body, the cam having the support portion arranged on an outer circumferential surface thereof. The cam has the protrusion.

In the implementation, the shift portion includes: a cam configured to rotate about an axis of rotation of the rotating body, the cam having the support portion arranged on an outer circumferential surface thereof; and an adjusting unit configured to rotate about a different axis of rotation parallel to the axis of rotation of the rotating body, the adjusting unit being configured to adjust a rotational position of the cam. The adjusting unit has the protrusion.

In the implementation, the rotating body includes a wheel on a vehicle body of a rolling walker.

Another aspect of the present invention provides a vehicle including: a vehicle body; a wheel rotatably supported by an axle of the vehicle body; and a speed control device for controlling rotation speed of the wheel. The speed control device includes: a brake drum integrated with the axle, the brake drum having a tubular portion; a brake shoe configured to be displaced and brought into contact with an inner circumferential surface of the tubular portion when acted upon by centrifugal force resulting from rotation of the wheel; and a limiting portion configured to limit displacement of the brake shoe. The brake shoe controls rotation of the wheel.

In the implementation, the limiting portion can limit the displacement of the brake shoe. This can prevent the brake shoe from contacting the inner circumferential surface of the tubular portion regardless of the rotation speed of the wheel. In the vehicle having the speed control device, the speed control device can remain deactivated.

### ADVANTAGEOUS EFFECTS

In the speed control device and vehicle described above, the speed control device can remain deactivated.

### BRIEF DESCRIPTION OF THE DRAWINGS

Fig. 1 schematically shows the configuration of a rollator relating to an embodiment of the present invention.
Fig. 2 is a sectional view of a wheel and a speed control device relating to an embodiment of the present invention, along the vertical direction and the vehicle width direction.
Fig. 3 is a plan view of a brake mechanism relating to a first embodiment of the present invention, viewed from the outside in the vehicle width direction.
Fig. 4 is a plan view showing a support portion relating to the first embodiment of the present invention.
Fig. 5 is a plan view of a brake mechanism relating to the first embodiment of the present invention, viewed from the outside in the vehicle width direction.
Fig. 6 is a plan view of a brake mechanism relating to a first modification example of the first embodiment of the present invention, viewed from the outside in the vehicle width direction.
Fig. 7 is a plan view of a brake mechanism relating to a second modification example of the first embodiment of the present invention, viewed from the outside in the vehicle width direction.
Fig. 8 is a plan view of a brake mechanism relating to a third modification example of the first embodiment of the present invention, viewed from the outside in the vehicle width direction.
Fig. 9 is a plan view of a brake mechanism relating to a fourth modification example of the first embodiment of the present invention, viewed from the outside in the vehicle width direction.
Fig. 10 is a plan view of the brake mechanism relating to the fourth modification example of the first embodiment of the present invention, viewed from the outside in the vehicle width direction.
Fig. 11 is a perspective view showing a boss plate relating to a second embodiment of the present invention.
Fig. 12 is a sectional view along the axial direction showing a boss portion relating to the second embodiment of the present invention.
Fig. 13 is a plan view of a carrier plate relating to a third embodiment of the present invention, viewed from the outside in the vehicle width direction.
Fig. 14 is a sectional view along the line A-A in Fig. 13.
Fig. 15 is a plan view of a brake mechanism relating to a fourth embodiment of the present invention implementing first-stage braking, viewed from the outside in the vehicle width direction.
Fig. 16 is a plan view of the brake mechanism relating to the fourth embodiment of the present invention implementing fourth-stage braking, viewed from the outside in the vehicle width direction.
Fig. 17 illustrates how a shift cam relating to the fourth embodiment of the present invention behaves.
Fig. 18 is a plan view of a brake mechanism relating to a fifth embodiment of the present invention, viewed from the outside in the vehicle width direction.

### DESCRIPTION OF THE PREFERRED EMBODIMENTS

The embodiments of the present invention will be hereinafter described with reference to the drawings.

### <Vehicle>

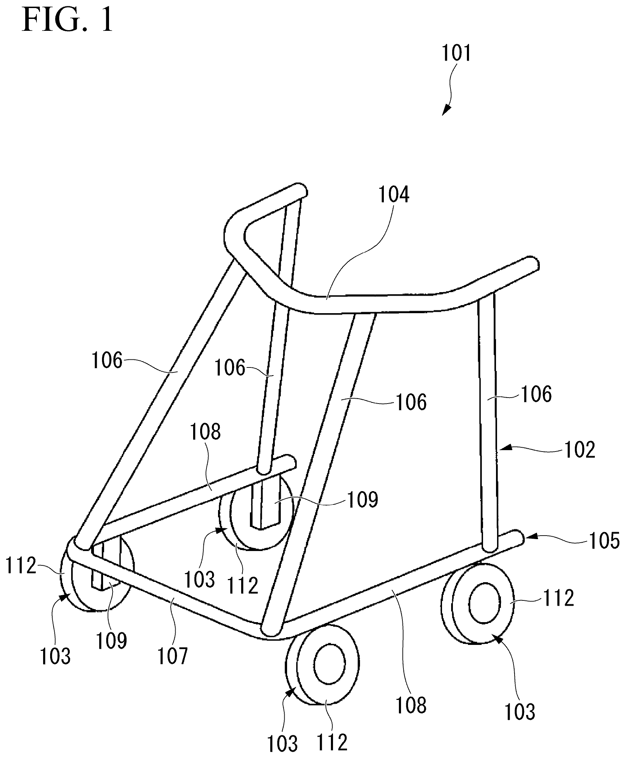

Fig. 1 is a schematic diagram of a rollator 101, or a vehicle according to an embodiment. In the following description, the vertical direction is defined as it is when the rollator 101 is used. The front direction is defined as the traveling direction of the rollator 101 being used, and the rear direction is defined as the opposite to the traveling direction. The vehicle width direction of the rollator 101 is defined as the direction orthogonal to the vertical direction and the front-rear direction.

The rollator 101 is used, for example, to assist a user in walking. As shown in Fig. 1, the rollator 101 includes a vehicle body 102, a plurality of (for example, four in the present embodiment) wheels 103 provided on the lower portion of the vehicle body 102, and an operating unit 104 provided on the upper portion of the vehicle body 102. The vehicle body 102 includes a lower frame 105 located on the lower side, and a plurality of vertical frames 106 rising upward from the lower frame 105.

The lower frame 105 includes a front frame 107 and two side frames 108. The front frame 107 is located on the front side and extends in the vehicle width direction, and the side frames 108 extend rearward from the respective width-wise ends of the front frame 107. The vertical frames 106 are provided on the upper portions of the front and rear portions of the side frames 108. The operating unit 104 is provided on the upper ends of the vertical frames 106. The operating unit 104 is U-shaped, opening rearward.

### <Wheel>

The wheels 103 provided on the vehicle body 102 are all configured in the same manner. Therefore, only one of the wheels 103 will be hereinafter described, and the other vehicle wheels 103 will not be described.

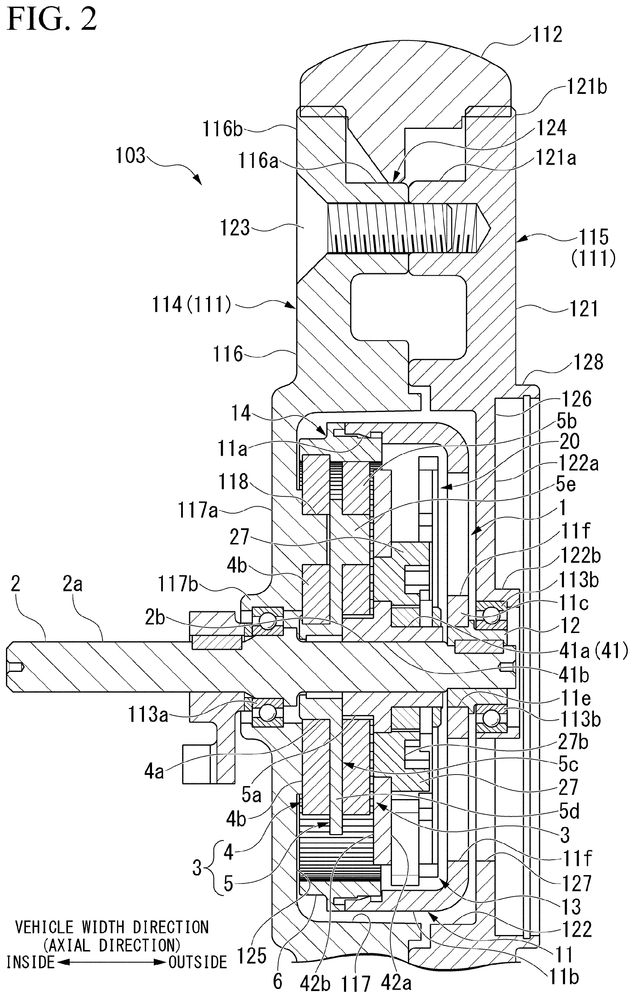

Fig. 2 is a sectional view showing the wheel 103 and speed control device 1, which will be described below, along the vertical direction and vehicle width direction. As shown in Figs. 1 and 2, the wheels 103 are mounted on brackets 109 that are provided at the lower portions of the front and rear portions of the side frames 108. Each wheel 103 includes an axle 2 supported by the bracket 109, a disc-shaped wheel rim 111 rotatably supported by the axle 2, and a tire 112 mounted on the outer circumference of the wheel rim 111.

The axle 2 is also used as a part of the speed control device 1, which will be described below. The axle 2 protrudes beyond the bracket 109 outwardly in the vehicle width direction. The axle 2 is arranged such that the axial direction of the axle 2 coincides with the vehicle width direction. The wheel rim 111 is supported by the axle 2 via two bearings 113a and 113b (a first bearing 113a and a second bearing 113b) such that the wheel rim 111 can rotate around the axle 2.

Of the two bearings 113a and 113b, the first bearing 113a is located inside the second bearing 113b in the vehicle width direction (closer to the bracket 109). Of the two bearings 113a and 113b, the second bearing 113b is located outside the first bearing 113a in the vehicle width direction. The second bearing 113b is mounted on the axle 2 via a bushing 12 provided on the axle 2. In the following description of the wheel 103 and speed control device 1, the vehicle width direction may be defined as the axial direction. The term "circumferential direction" refers to the direction of rotation of the wheel 103. The term "radial direction" refers to the radial direction of the axle 2, which is orthogonal to the axial and circumferential directions.

The wheel rim 111 includes two wheel plates 114 and 115 shaped like a disc (a first wheel plate 114 and a second wheel plate 115) that overlap as viewed in the axial direction. Of the two wheel plates 114 and 115, the first wheel plate 114, which is located closer to the bracket 109, has a disc-shaped first disc portion 116. The first disc portion 116 has an outer circumferential surface 116a, which has a first outer flange portion 116b integrally formed thereon. The first outer flange portion 116b is positioned on the first disc portion 116 relatively inside in the vehicle width direction.

The first disc portion 116 has a first accommodating recess 117 at the center in the radial direction. The first accommodating recess 117 opens outward in the vehicle width direction. The first accommodating recess 117 is circularly shaped as viewed in the axial direction. The first accommodating recess 117 has a bottom wall 117a, which has a first bearing housing 117b and a plurality of (for example, three in the present embodiment) first planetary support pins 118 integrally formed thereon.

The first bearing housing 117b is located at the center in the radial direction. The first bearing housing 117b is rotatably supported by the axle 2 via the first bearing 113a. The first planetary support pins 118 protrude from the bottom wall 117a outwardly in the vehicle width direction. The first planetary support pins 118 are arranged at even intervals in the circumferential direction so as to surround the first bearing housing 117b. The first planetary support pins 118 constitute a part of the speed control device 1 described below.

Of the two wheel plates 114 and 115, the second wheel plate 115, which is located relatively outside in the vehicle width direction, has a disc-shaped second disc portion 121. The outer diameter of the second disc portion 121 is equal to that of the first disc portion 116. The second disc portion 121 has an outer circumferential surface 121a, which has a second outer flange portion 121b integrally formed thereon. The second outer flange portion 121b is positioned on the second disc portion 121 relatively outside in the vehicle width direction.

The second disc portion 121 has a second accommodating recess 122 and a bearing housing accommodating recess 126 at the center in the radial direction. The second accommodating recess 122 opens inwardly in the vehicle width direction, and the bearing housing accommodating recess 126 opens outwardly in the vehicle width direction. The second accommodating recess 122 is circularly shaped as viewed in the axial direction. The inner diameter of the second accommodating recess 122 is equal to that of the first accommodating recess 117. The second accommodating recess 122 has a bottom wall 122a, which has a second bearing housing 122b integrally formed thereon. The second bearing housing 122b is located at the center in the radial direction. The second bearing housing 122b protrudes toward the bearing housing accommodating recess 126. The second bearing housing 122b is rotatably supported by the axle 2 via the second bearing 113b.

The bottom wall 122a has an operation window 127, which is located outside the second bearing housing 122b in the radial direction. The operation window 127 is used to operate the speed control device 1, which will be described below.

The bearing housing accommodating recess 126 is circularly shaped, as viewed from the axial direction. The inner diameter of the bearing housing accommodating recess 126 is slightly greater than that of the second accommodating recess 122. The bearing housing accommodating recess 126 has a cover mounting portion 128 integrally formed on the inner circumferential edge thereof. The cover mounting portion 128 has a cylindrical shape and protrudes outwardly in the vehicle width direction. The inner diameter of the cover mounting portion 128 is equal to that of the bearing housing accommodating recess 126. On the cover mounting portion 128, a cover (not shown) is mounted. The cover closes the opening of the cover mounting portion 128. This can prevent entry of splashing water or dust into the interior from the outside through the second bearing 113b or the operation window 127.

The above-described first and second disc portions 116 and 121 are coaxially overlaid on each other and fastened and fixed together by means of bolts 123. A tire housing recess 124 is defined between the outer flange portion 116b on the outer circumferential surface 116a of the first disc portion 116 and the outer flange portion 121b on the outer circumferential surface 121a of the second disc portion 121. The tire 112 is mounted with part of it fitting in the tire housing recess 124. The first and second accommodating recesses 117 and 122 are overlaid on each other with their openings being arranged next to each other and their perimeters being closed, thereby defining a control device accommodating portion 125. The speed control device 1 is accommodated in the control device accommodating portion 125.

### [First Embodiment]

### <Speed control device>

In addition to the axle 2, the speed control device 1 has a planetary gear mechanism 3 accommodated in the first accommodating recess 117, a bottomed cylindrical brake drum 11 attached to the planetary gear mechanism 3 while facing the second wheel plate 115, and a centrifugal brake unit 13 accommodated in the brake drum 11.

The planetary gear mechanism 3 has a two-stage configuration. Specifically, the planetary gear mechanism 3 includes a first-stage gear mechanism 4 and a second-stage gear mechanism 5. The first-stage gear mechanism 4 is located on the bottom wall 117a of the first accommodating recess 117, and the second-stage gear mechanism 5 is located outside the first-stage gear mechanism 4 in the vehicle width direction. The first-stage gear mechanism 4 includes a first sun gear 4a rotatably supported by the axle 2, and a plurality of (for example, three in the present embodiment) first planetary gears 4b arranged around the first sun gear 4a.

The first planetary gears 4b are meshed with the first sun gear 4a. The first planetary gears 4b are rotatably supported by the first planetary support pins 118, which are molded in one piece with the bottom wall 117a of the first accommodating recess 117. In other words, the bottom wall 117a serves as a planetary carrier that integrally supports the first planetary gears 4b.

The second-stage gear mechanism 5 includes a second sun gear 5a, a plurality of (for example, three in the present embodiment) second planetary gears 5b, and a second planetary carrier 5c. The second sun gear 5a is rotatably supported by the axle 2 and arranged next to the first sun gear 4a, the second planetary gears 5b are arranged around the second sun gear 5a, and the second planetary carrier 5c rotatably and integrally supports the second planetary gears 5b. The second planetary gears 5b are meshed with the second sun gear 5a. The second sun gear 5a also constitutes a part of the centrifugal brake unit 13.

The second planetary carrier 5c includes a disc-shaped carrier plate 5d and second planetary support pins 5e protruding from the carrier plate 5d. The carrier plate 5d projects from the outer circumferential surface of the first sun gear 4a outwardly in the radial direction, and the second planetary support pins 5e protrude from the width-wise outer surface 5f of the carrier plate 5d outwardly in the vehicle width direction. The second planetary support pins 5e are positioned correspondingly to the second planetary gears 5b and rotatably support the second planetary gears 5b. A common internal gear 6 is shared between the gear mechanisms 4 and 5 such that the planetary gears 4b and 5b are meshed with the internal gear 6. The internal gear 6 is cylindrically shaped to surround the planetary gears 4b and 5b. The brake drum 11 is fixedly attached to the outer end of the internal gear 6 in the vehicle width direction. Lubricant, which is not shown, is applied to where the gears 4a to 5b, and 6 are meshed.

The brake drum 11 is arranged with its opening 11a facing the internal gear 6. Specifically, the brake drum 11 has a cylindrical portion 11b, and a bottom portion 11c that is molded in one piece with the width-wise external portion of the cylindrical portion 11b. The inner circumferential surface of the cylindrical portion 11b is fitted with the outer circumferential surface of the internal gear 6. Thus, the brake drum 11 is fixedly attached to the internal gear 6.

The bottom portion 11c has a through hole 11e at the center in the radial direction. A bushing 12, which is provided on the axle 2, is press-fitted in the through hole 11e. Thus, the brake drum 11 is fixedly attached to the axle 2. By means of the brake drum 11, the internal gear 6 is fixedly attached to the axle 2. The bottom portion 11c has a plurality of operation windows 11f. Through the operation windows 11f and also through the operation window 127 in the second wheel plate 115, a communication is established between the interior of the brake drum 11 and the outside of the wheel 103.

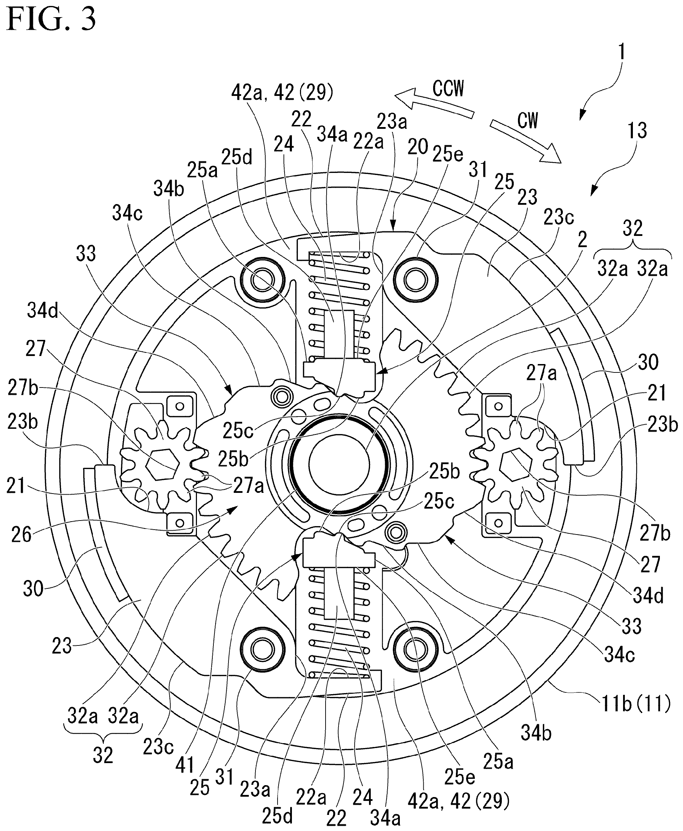

Fig. 3 is a plan view of the brake mechanism 20 of the centrifugal brake unit 13, viewed from the outside in the vehicle width direction. As shown in Figs. 2 and 3, the centrifugal brake unit 13 has a boss plate 29, and the brake mechanism 20 provided on the boss plate 29. The boss plate 29 has a part constituting the second sun gear 5a.

The boss plate 29 has a cylindrical boss portion 41 and a disc-shaped plate portion 42 that extends from the outer circumferential surface of the boss portion 41 outwardly in the radial direction. The boss portion 41 and plate portion 42 are molded in one piece. The plate portion 42 is positioned slightly inside in the vehicle width direction with respect to the middle of the boss portion 41 in the axial direction. The plate portion 42 has an outer surface 42a facing outward in the vehicle width direction, from which two support shafts 31 protrude to support the brake shoes 23. The two support shafts 31 face each other in the radial direction centered around the axle 2. The two support shafts 31 are provided on the outer peripheral portion of the plate portion 42. The second sun gear 5a is molded in one piece with the outer circumferential surface 41a of the boss portion 41 protruding from the width-wise inner surface 42b of the plate portion 42. Lubricant (not shown) is applied between the axle 2 and the above-described boss portion 41.

The brake mechanism 20 has: two brake shoes 23, a shift cam 26, two adjustment gears 27 that are rotatably supported by the boss plate 29; and two compression coil springs 24 and two support portions 25 that are located between the shift cam 26 and the brake shoes 23 in the radial direction.

The brake shoes 23 are rotatably supported by the two support shafts 31 of the plate portion 42. In other words, the brake shoes 23 face the cylindrical portion 11b of the brake drum 11 in the radial direction. The two brake shoes 23 are configured in the same manner and point-symmetrically arranged with respect to the axle 2. Therefore, the following description only focuses on one of the two brake shows 23. The other brake shoe 23 is referred using the same reference numerals and not specifically described herein.

The brake shoe 23 is shaped like a long plate in the circumferential direction. A spring seat 22 is molded in one piece with a first end 23a of the brake shoe 23 in the longitudinal direction. The spring seat 22 protrudes in the circumferential direction from the radially outer edge of the brake shoe 23. A second end 23b of the brake shoe 23, which is opposite the first end 23a in the longitudinal direction, has an avoidance recess 21. The avoidance recess 21 is formed in the second end 23b of the brake shoe 23 at the radially inner corner. The avoidance recess 21 is provided to prevent the brake shoe 23 and the adjustment gear 27 from contacting each other.

The outer surface 23c of the brake shoe 23 facing outward in the radial direction is shaped like an arc extending along the outer periphery of the plate portion 42. On the outer surface 23c, a pad 30 is mounted near the second end 23b. The above-described brake shoe 23 is rotatably supported by the support shaft 31, which is positioned off the length-wise middle of the brake shoe 23 toward the first end 23a. As the brake shoe 23 is caused to swing around the support shaft 31, the pad 30 is brought into contact with the cylindrical portion 11b of the brake drum 11.

The shift cam 26 is rotatably supported by the outer surface 41a of the boss portion 41 that protrudes from the outer surface 42a of the plate portion 42. The shift cam 26 has two meshing portions 32 on its outer periphery, which face each other in the radial direction centered around the axle 2. The two meshing portions 32 have a plurality of teeth 32a. The two meshing portions 32 face the second ends 23b of the brake shoes 23 in the radial direction.

The shift cam 26 has cam portions 33 on its outer periphery. The cam portions 33 face each other in the radial direction centered around the axle 2, and are arranged between the two adjacent meshing portions 32 in the circumferential direction. The two cam portions 33 face the spring seats 22 of the brake shoes 23 in the radial direction. The two cam portions 33 have a plurality of (for example, four in the first embodiment) steps 34a, 34b, 34c, 34d (a first step 34a, a second step 34b,a third step 34c, a fourth step 34d) that are at different distances in the radial direction from the axle 2.

The two first steps 34a are in front of the meshing portions 32 in the counterclockwise direction (see the arrow CCW in Fig. 3, hereinafter simply referred to as the counterclockwise CCW), as viewed from the outside in the vehicle width direction (see Fig. 3). The two second steps 34b are in front of the first steps 34a in the counterclockwise CCW direction. The two second steps 34b are at a greater distance from the axle 2 than the first steps 34a.

The two third steps 34c are in front of the second steps 34b in the counterclockwise CCW direction. The two third steps 34c are at a greater distance from the axle 2 than the second steps 34b. The two fourth steps 34d are in front of the third steps 34c in the counterclockwise CCW direction. The two fourth steps 34d are at a greater distance from the axle 2 than the third steps 34c.

Each adjustment gear 27 is provided on the plate portion 42 between the second end 23b of the brake shoe 23 and the meshing portion 32 of the shift cam 26, as viewed in the axial direction. The two adjustment gears 27 are configured in the same manner. Therefore, the following description only focuses on one of the two adjustment gears 27. The other adjustment gear 27 is referred using the same reference numerals and not specifically described herein.

The adjustment gear 27 is a spur gear. The adjustment gear 27 is rotatably supported by the plate portion 42. The adjustment gear 27 has a plurality of teeth 27a on its outer peripheral portion that mesh with the meshing portion 32 of the shift cam 26. The adjustment gear 27 has an engagement recess 27b that can receive an end of a tool (not shown) such as a hexagonal wrench. Through the operation windows 11f in the brake drum 11 and also through the operation window 127 in the second wheel plate 115, the engagement recess 27b is exposed to the outside of the wheel 103.

In the above-described implementation, a tool, which is not shown, is inserted into the engagement recess 27b from outside the wheel 103 through the operation window 127 in the second wheel plate 115 and through the operation windows 11f in the brake drum 11. The tool is then rotated to rotate the adjustment gear 27 relative to the plate portion 42.

The compression coil spring 24 extends in the radial direction between the spring seat 22 of the brake shoe 23 and the cam portion 33 of the shift cam 26. The radially outer end of the compression coil spring 24 butts up against the spring seat 22.

### <Support Portion>

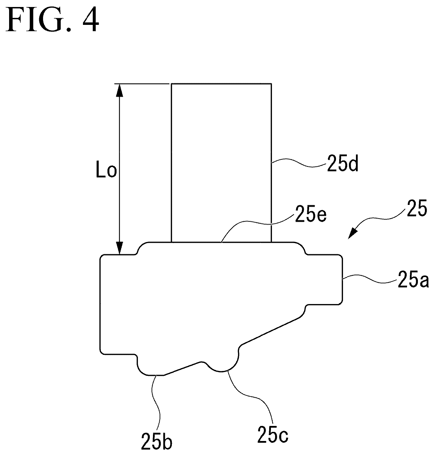

Fig. 4 is a plan view of the support portion 25. As shown in Fig. 3 and 4, the support portion 25 faces the spring seat 22 of the brake shoe 23 in the radial direction. The support portion 25 includes a spring seat 25a against which the radially inner end of the compression coil spring 24 butts, and two support protrusions 25b and 25c protruding from the spring seat 25a toward the cam portion 33 and molded in one piece with the spring seat 25a. The two support protrusions 25b and 25c have a spherical or arc-shaped surface.

Each support portion 25 is provided between the compression coil spring 24 and the cam portion 33 of the shift cam 26. The two support portions 25 are configured in the same manner. Therefore, the following description only focuses on one of the two support portions 25. The other support portion 25 is referred using the same reference numerals and not specifically described herein.

The support portion 25 includes a spring seat 25a against which the radially inner end of the compression coil spring 24 butts, and two support protrusions 25b and 25c protruding from the spring seat 25a toward the cam portion 33 and molded in one piece with the spring seat 25a. The spring seat 25a has a support surface 25e that faces the spring seat 22 of the brake shoe 23 and that has a limiting protrusion 25d protruding toward the spring seat 22 of the brake shoe 23. The limiting protrusion 25d is molded in one piece with the support surface 25e. The limiting protrusion 25d is formed in, for example, a cylindrical shape. The limiting protrusion 25d is inserted into the compression coil spring 24. The protruding length Lo of the limiting protrusion 25d is determined such that the limiting protrusion 25d does not butt against the spring seat 22 of the brake shoe 23 when the support portion 25 is positioned by any one of the first to third steps 34a to 34c of the four steps 34a to 34d of the shift cam 26 and when the wheel 103 is not rotating.

The two support protrusions 25b and 25c have a spherical or arc-shaped surface. Between the two support protrusions 25b and 25c, the corner of one of the steps 34a to 34d of the cam portion 33 can fit. This enables the steps 34a to 34d of the cam portion 33 to place the support portion 25 at different positions. As the support portion 25 is provided, the compression coil spring 24 can remain in a slightly compressed state between the support portion 25 and the spring seat 22 of the brake shoe 23. The spring seat 22 of the brake shoe 23 is thus elastically biased by the compression spring 24 outwardly in the radial direction. The support portion 25 is constantly biased elastically by the compression coil spring 24 toward the cam portion 33.

### <How Speed Control Device Works>

### <How Centrifugal Brake Unit Works>

The following now describes how the speed control device 1 works. The following first describes how the centrifugal brake unit 13 works. As a user pushes the operating unit 104 of the rollator 101, the wheels 103 rotate and the rollator 101 moves. As each wheel 103 rotates, the first planetary gears 4b, which are rotatably supported by the bottom wall 117a of the first accommodating recess 117, orbit around the first sun gear 4a while meshing with the first sun gear 4a and the internal gear 6. This causes the first sun gear 4a and also the carrier plate 5d, which is integrated with the first sun gear 4a, to rotate.

As the carrier plate 5d rotates, the second planetary gears 5b, which are rotatably supported by the carrier plate 5d, orbit around the second sun gear 5a while meshing with the second sun gear 5a and the internal gear 6. This causes the second sun gear 5a and also the boss plate 29, which is integrated with the second sun gear 5a, to rotate. Thus, the rotation of the wheel 103 is increased by the planetary gear mechanism 3 and transmitted to the boss plate 29.

The boss plate 29 rotates, which causes centrifugal force to act on the brake shoe 23 rotatably supported by the boss plate 29. Here, the brake shoe 23 is rotatably supported by the support shaft 31, which is positioned off the length-wise middle of the brake shoe 23 toward the first end 23a. Therefore, when centrifugal force acts on the brake shoe 23, the brake shoe 23 tries to swing around the support shaft 31 so that the second end 23b side of the brake shoe 23 moves outwardly in the radial direction. As a result of this swinging, the first end 23a of the brake shoe 23 tries to move inwardly in the radial direction, that is, so that the brake shoe 23 compresses the compression coil spring 24.

The rollator 101 may travel at a low speed, and the rotation speed of the boss plate 29 may be less than a predetermined rotation speed. In other words, when the rotation speed of the wheel 103 is less than a predetermined rotation speed, only low centrifugal force acts on the brake shoe 23. Therefore, the spring force applied by the compression coil spring 24 is greater than the compression force applied to the compression coil spring 24 by the brake shoe 23. Therefore, the brake shoe 23 swings to a small extent, so that the pad 30 of the brake shoe 23 is not brought into contact with the cylindrical portion 11b of the brake drum 11.

The rollator 101 may travel at a higher speed than the predetermined speed, and the rotation speed of the boss plate 29 may exceed the predetermined rotation speed. In other words, when the rotation speed of the wheel 103 is greater than a predetermined rotation speed, high centrifugal force acts on the brake shoe 23. The brake shoe 23 overcomes the spring force applied by the compression coil spring 24 and swings significantly, so that the pad 30 of the brake shoe 23 is pressed against the cylindrical portion 11b of the brake drum 11. This results in a braking force acting on the brake drum 11, which reduces the rotation of the wheel 103 and also reduces the traveling speed of the rollator 101.

### <How Shift Cam Works>

The following describes how the shift cam 26 works. A cover, which is not shown, is removed from the wheel 103, and a tool, which is not shown, is used to rotate the adjustment gear 27 from outside the wheel 103. The shift cam 26, which is engaged with the adjustment gear 27, is then rotated, so that the position of the support portion 25 can be changed by the respective steps 34a to 34d of the cam portion 33.

More specifically, suppose, for example, that the support portion 25 may be originally positioned by the first step 34a. This state is hereinafter referred to as first-stage braking. In the first-stage braking, the compression coil spring 24 is compressed to a low extent. Therefore, the spring force applied by the compression coil spring 24, in other words, the force applied by the compression coil spring 24 elastically to bias the spring seat 22 is minimized. Therefore, it takes a relatively low centrifugal force to cause the brake shoe 23 to swing. This means that the brake force acts on the brake drum 11 even when the rotation speed of the wheel 103 is still low.

The shift cam 26 may be then rotated clockwise in Fig. 3 (see the arrow CW in Fig. 3, hereafter simply referred to as clockwise CW) from the first step 34a by means of the adjustment gear 27. As a result, the support portion 25 now rests on the second step 34b. The support portion 25 is positioned by the second step 34b. This state is hereinafter referred to as second-stage braking. During the second-stage braking, the support portion 25 is closer to the spring seat 22 than during the first-stage braking. Accordingly, the compression coil spring 24 is compressed to a greater extent, and the spring force applied by the compression coil spring 24 is higher. This means that, in order to cause the brake shoe 23 to apply a braking force to the brake drum 11, the rotation speed of the wheel 103 is required to reach a higher level than in the first-stage braking.

The shift cam 26 may be then rotated further in the clockwise CW direction by means of the adjustment gear 27. As a result, the support portion 25 rests on the third step 34c. The support portion 25 is positioned by the third step 34c. This state is hereinafter referred to as third-stage braking. In the third-stage braking, the support portion 25 is closer to the spring seat 22 than in the second-stage braking. Accordingly, the compression coil spring 24 is compressed to a greater extent, and the spring force applied by the compression coil spring 24 is further higher. This means that, in order to cause the brake shoe 23 to apply a braking force to the brake drum 11, the rotation speed of the wheel 103 is required to reach an even higher level than in the second-stage braking.

The shift cam 26 may be then rotated further in the clockwise CW direction by means of the adjustment gear 27. As a result, the support portion 25 rests on the fourth step 34d. The support portion 25 is positioned by the fourth step 34d. This state is hereinafter referred to as fourth-stage braking. In the fourth-stage braking, the support portion 25 is closer to the spring seat 22 than in the third-stage braking. Accordingly, the compression coil spring 24 is compressed to a greater extent, and the spring force applied by the compression coil spring 24 is further higher. This means that, in order to cause the brake shoe 23 to apply a braking force to the brake drum 11, the rotation speed of the wheel 103 is required to reach an even higher level than in the third-stage braking.

As described above, the shift cam 26 can be used to adjust the spring force applied by the compression coil spring 24 as the position of the shift cam 26 in the rotational direction determines the position of the support portion 25. As a result, the shift cam 26 can be used to adjust the timing of the brake force acting on the brake drum 11. In other words, the shift cam 26 is responsible for displacing the support portion 25 in the direction in which the compression coil spring 24 can be compressed, so as to reduce the pressing force applied by the brake shoe 23 to the cylindrical portion 11b of the brake drum 11. The shift cam 26 is also responsible for displacing the support portion 25 in the direction in which the compression coil spring 24 can be elongated, so as to increase the pressing force applied by the brake shoe 23 on the cylindrical portion 11b of the brake drum 11.

### <How Support Portion Works>

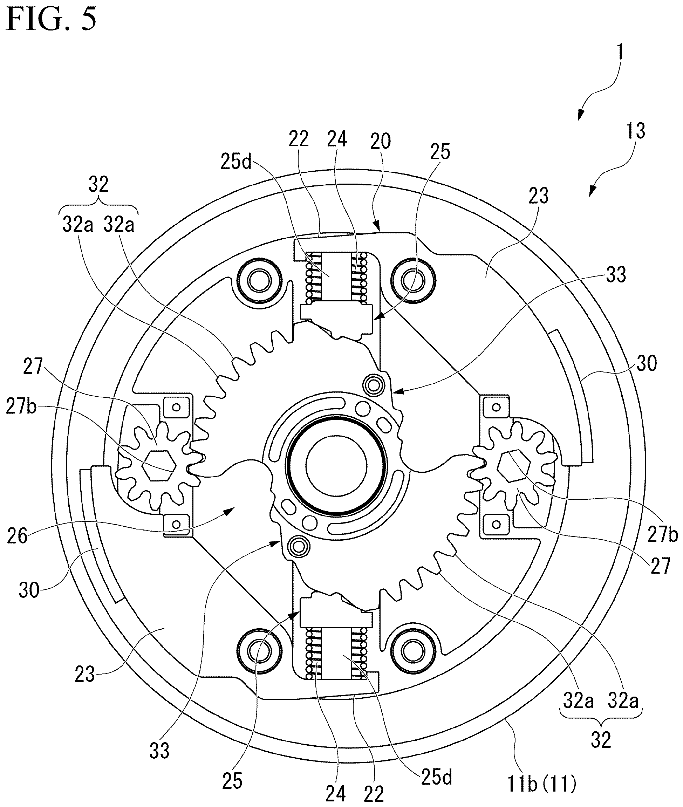

Fig. 5 is a plan view of the brake mechanism 20, viewed from the outside in the vehicle width direction. Fig. 5 shows that the support portion 25 is positioned by the fourth step 34d of the shift cam 26. Fig. 5 corresponds to Fig. 3 referred to in the above. As shown in Fig. 5, the protruding length Lo of the limiting protrusion 25d is determined such that the limiting protrusion 25d butts up against the spring seat 22 of the brake shoe 23 when the support portion 25 is positioned by the fourth step 34d of the four steps 34a to 34d of the shift cam 26, irrespective of whether the wheel 103 is rotating. Hereinafter, the term "a brake mechanism operating state" represents the state in which the support portion 25 is positioned by any of the first to third steps 34a to 34c of the shift cam 26. The term "a brake mechanism non-operating state" represents the state in which the support portion 25 is positioned by the fourth step 34d of the shift cam 26.

In the implementation, as shown in Fig. 3, in the brake mechanism operating state, the limiting protrusion 25d is not in contact with the spring seat 22 of the brake shoe 23 while the wheel 103 is not rotating. Therefore, if the rollator 101 travels at a higher speed than a predetermined speed and the rotation speed of the wheel 103 exceeds a predetermined speed, the centrifugal force acting on the brake shoe 23 causes the pad 30 of the brake shoe 23 to be pressed against the cylindrical portion 11b of the brake drum 11. As a result, a braking force acts on the brake drum 11.

On the other hand, in the brake mechanism non-operating state shown in Fig. 5, the limiting protrusion 25d butts up against the spring seat 22 of the brake shoe 23 irrespective of whether the wheel 103 is rotating. This prevents the brake shoe 23 from swinging. In this case, the brake shoe 23 never swings even under the influence of centrifugal force. Therefore, no braking force acts on the brake drum 11, so that the brake mechanism 20 never operates.

The following describes in detail how the compression coil spring 24 and the limiting protrusion 25d have different functions. The compression coil spring 24 controls how much pressing force is applied by the brake shoe 23 to the brake drum 11 and when the brake shoe 23 starts swinging, depending on the position of the support portion 25. Stated differently, the compression coil spring 24 controls how much the brake shoe 23 can swing. The limiting protrusion 25d, on the other hand, restricts the swinging behavior (displacement) of the brake shoe 23 itself. As the swinging behavior of the brake shoe 23 is restricted, the brake shoe 23 is prevented from swinging beyond a predetermined range. When the swinging behavior of the brake shoe 23 is restricted, the pad 30 of the brake shoe 23 is prevented from touching the brake drum 11 irrespective of whether the wheel 103 rotates.

The speed control device 1 relating to the first embodiment described above has the brake drum 11 integrated with the wheel 103, the brake shoe 23 configured to apply a braking force to the brake drum 11 by contacting the brake drum 11, and the limiting protrusion 25d configured to limit the swinging behavior of the brake shoe 23. The limiting protrusion 25d can thus keep the speed control device 1 deactivated irrespective of whether the wheel 103 is rotating. In other words, the brake mechanism 20 can be placed and remain in the brake mechanism non-operating state.

The brake mechanism 20 is constituted by the compression coil spring 24 for controlling how much the brake shoe 23 swings, the support portion 25 supporting the compression coil spring 24, and the shift cam 26 for positioning the support portion 25 in steps. In the brake mechanism 20 configured in this manner, the support portion 25 has the limiting protrusion 25d. The brake shoe 23 may overcome the spring force applied by the compression coil spring 24 to swing and try to contact the cylindrical portion 11b of the brake drum 11. This contact can be blocked by the limiting protrusion 25d. Therefore, the brake mechanism non-operating state can be reliably achieved with a simple structure. The brake mechanism non-operating state can be easily achieved by simply molding the limiting protrusion 25d in one piece with the support portion 25.

The brake shoe 23 is configured to swing around the support shaft 31. The spring seat 22 is molded in one piece with the first end 23a of the brake shoe 23. The pad 30 is attached to the second end 23b of the brake shoe 23. In this way, the pad 30 can move toward the cylindrical portion 11b according to the rotation speed of the wheel 103. The brake shoe 23 is configured to swing by overcoming the spring force applied by the compression coil spring 24. It only requires a simple structure to allow the speed control device 1 to start operating at different timings depending on the rotation speed of the wheel 103.

In the rollator 101 having the speed control device 1 as described above, the speed control device 1 can be controlled not to operate.

According to the first embodiment described above, the limiting protrusion 25d is provided on the support portion 25 as a limiting portion configured to restrict the swinging behavior of the brake shoe 23. The first embodiment, however, is not limited to such, and any arrangement can be employed as long as they can restrict the swinging behavior of the brake shoe 23. The other arrangements are specifically described in the following.

### [First Modification Example of First Embodiment]

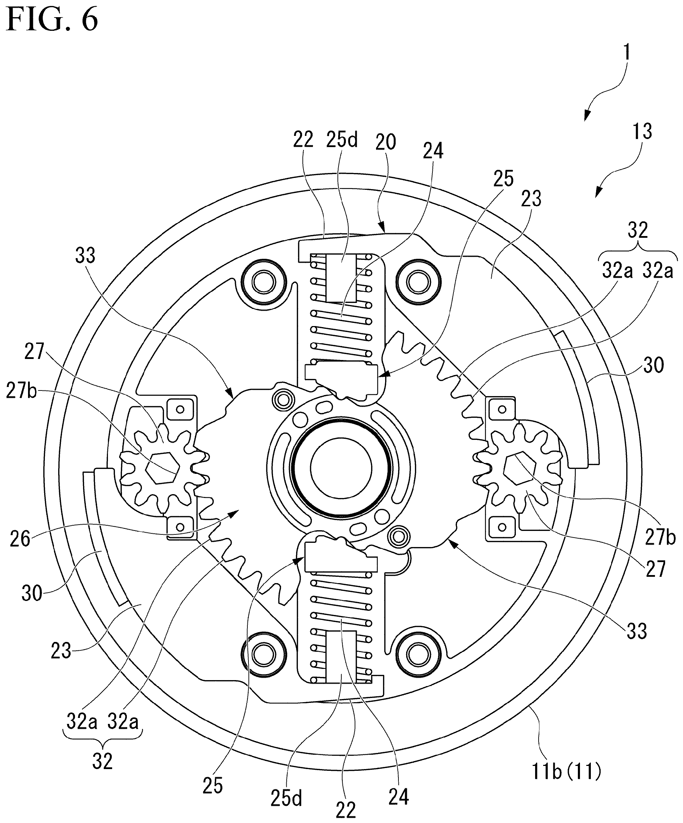

Fig. 6 is a plan view of a brake mechanism 20 relating to a first modification example of the first embodiment, viewed from the outside in the vehicle width direction. Fig. 6 shows that the support portion 25 is positioned by the first step 34d of the shift cam 26. Fig. 6 corresponds to Fig. 3 referred to in the above. As shown in Fig. 6, in place of the support portion 25, it may be the spring seat 22 of the brake shoe 23 that has the limiting protrusion 25d. The limiting protrusion 25d protrudes toward the support portion 25 from the contact surface 22a of the spring seat 22, which is opposite the support portion 25. The first modification example described above can thus produce the same effects as the first embodiment.

### [Second Modification Example of First Embodiment]

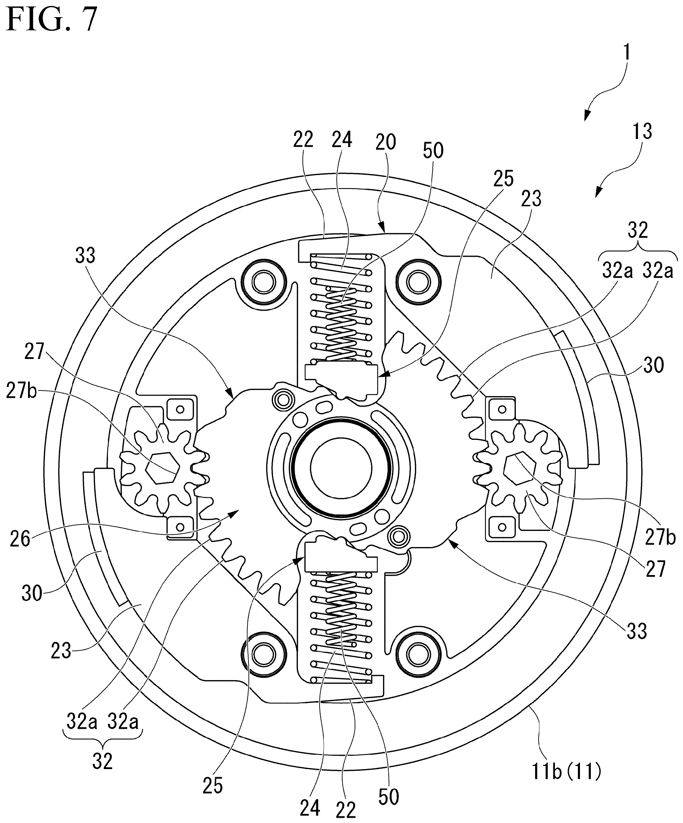

Fig. 7 is a plan view of a brake mechanism 20 relating to a second modification example of the first embodiment, viewed from the outside in the vehicle width direction. Fig. 7 shows that the support portion 25 is positioned by the first step 34a of the shift cam 26. Fig. 7 corresponds to Fig. 3 referred to in the above.

As shown in Fig. 7, the support portion 25 may have a second compression coil spring 50 in place of the limiting protrusion 25d. The second compression coil spring 50 is accommodated in the radially internal portion of the compression coil spring 24. The second compression coil spring 50 may restrict the swinging behavior of the brake shoe 23. In this case, the combined spring forces applied by the compression coil spring 24 and the second compression coil spring 50 may act to restrict the swinging behavior of the brake shoe 23. The second modification example described above can thus produce the same effects as the second embodiment.

### [Third Modification Example of First Embodiment]

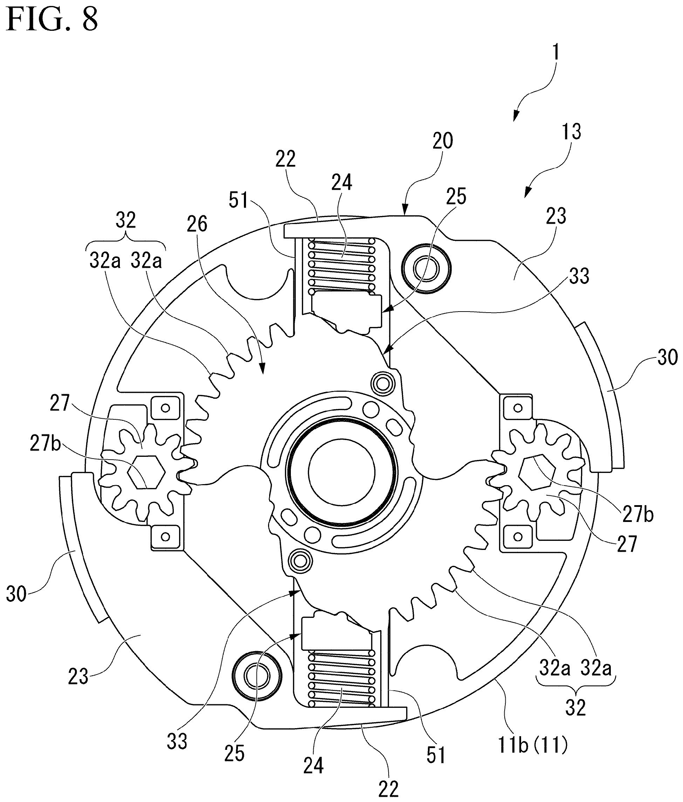

Fig. 8 is a plan view of a brake mechanism 20 relating to a third modification example of the first embodiment, viewed from the outside in the vehicle width direction. Fig. 8 shows that the support portion 25 is positioned by the fourth step 34d of the shift cam 26. Fig. 8 corresponds to Fig. 5 referred to in the above. As shown in Fig. 8, the shift cam 26 may have a limiting protrusion 51, in place of the support portion 25 having the limiting protrusion 25d. The limiting protrusion 51 is configured to butt up against the spring seat 22 of the brake shoe 23 when the support portion 25 is positioned by the fourth step 34d of the shift cam 26. The third modification example described above can thus produce the same effects as the second embodiment.

### [Fourth Modification Example of First Embodiment]

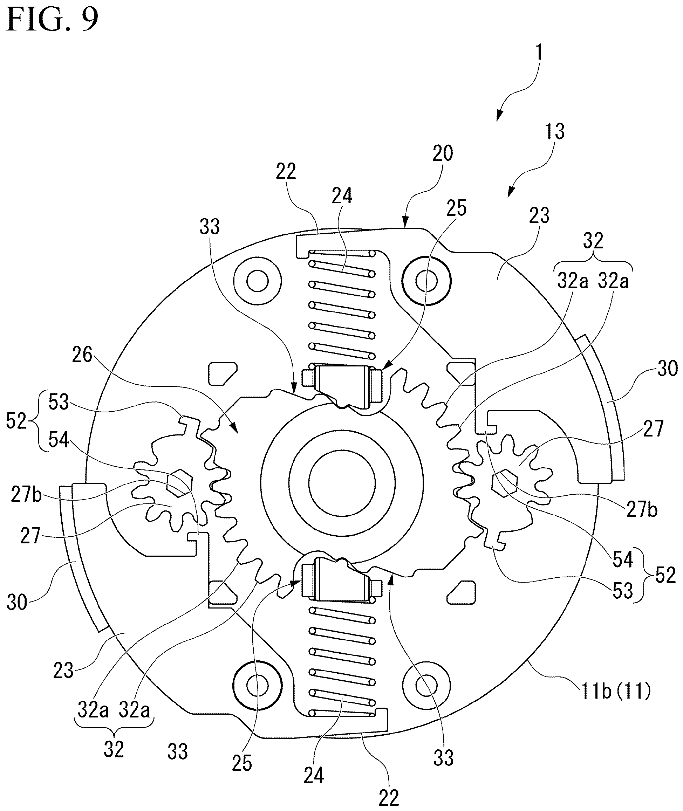

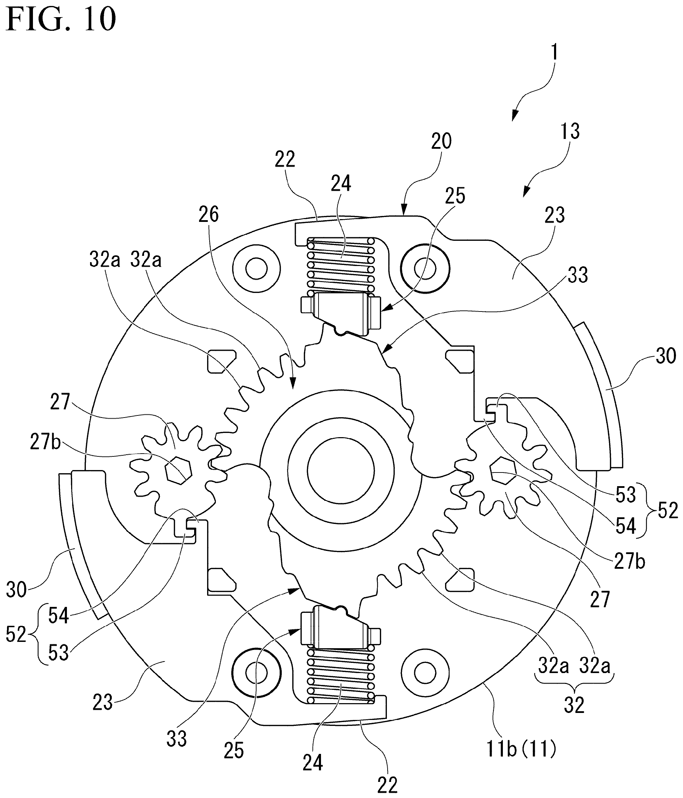

Fig. 9 is a plan view of a brake mechanism 20 relating to a fourth modification example of the first embodiment, viewed from the outside in the vehicle width direction. Fig. 9 shows a brake mechanism operating state (first-stage braking). Fig. 10 is a plan view of the brake mechanism 20 relating to the fourth modification example of the first embodiment, viewed from the outside in the vehicle width direction. Fig. 10 shows a brake mechanism non-operating state (fourth-stage braking). Figs. 9 and 10 correspond to Fig. 5 referred to in the above.

As shown in Fig. 9, the adjustment gear 27 and brake shoe 23 may each have a limiting engagement portion 52, in place of the support portion 25 having the limiting protrusion 25d. The limiting engagement portion 52 includes a gear-side pawl 53 that is molded in one piece with the adjustment gear 27, and a brake-side pawl 54 that is molded in one piece with the brake shoe 23. The gear-side pawl 53 is molded in one piece with a portion of the teeth 27a of the adjustment gear 27. The brake-side pawl 54 is molded as an integral part of a radially internal portion of the avoidance recess 21 of the brake shoe 23. These pawls 53 and 54 are not engaged with each other in the brake mechanism operating state.

As shown in Fig. 10, on the other hand, the pawls 53 and 54 are engaged with each other if the adjustment gear 27 is rotated and the brake mechanism non-operating state is achieved. This prevents the brake shoe 23 from swinging. The fourth modification example described above can thus produce the same effects as the second embodiment.

In the fourth modification example described above, the adjustment gear 27 and brake shoe 23 each have the limiting engagement portion 52 (the gear-side pawl 53 and brake-side pawl 54). The fourth modification example, however, is not limited to such, and it is only at least one of the adjustment gear 27 or the brake shoe 23 that needs to have the limiting engagement portion 52. If either the adjustment gear 27 or the brake shoe 23 has the limiting engagement portion 52, the limiting engagement portion 52 may butt up against or be engaged with the other of the adjustment gear 27 or the brake shoe 23. This may prevent the swinging behavior of the brake shoe 23.

### [Second Embodiment]

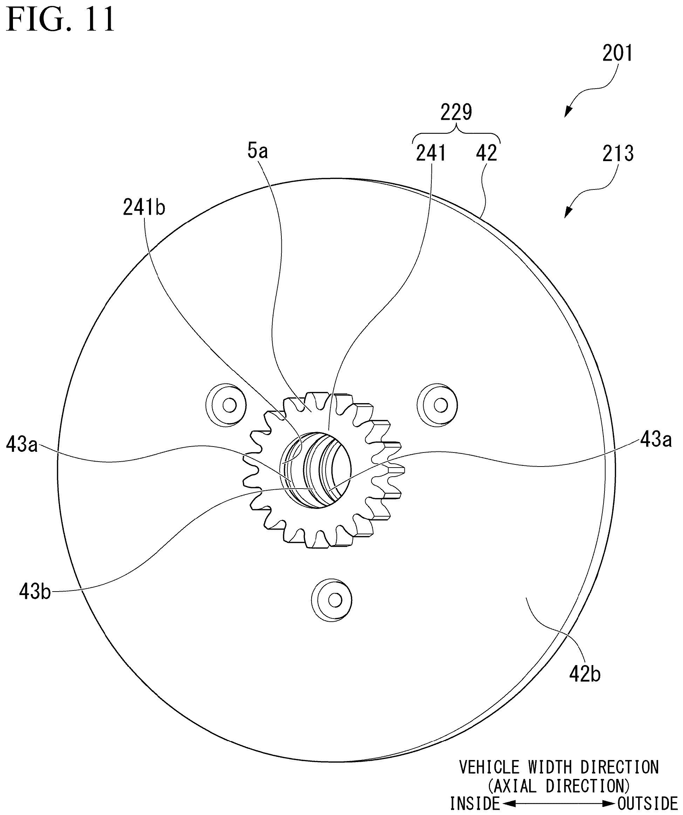

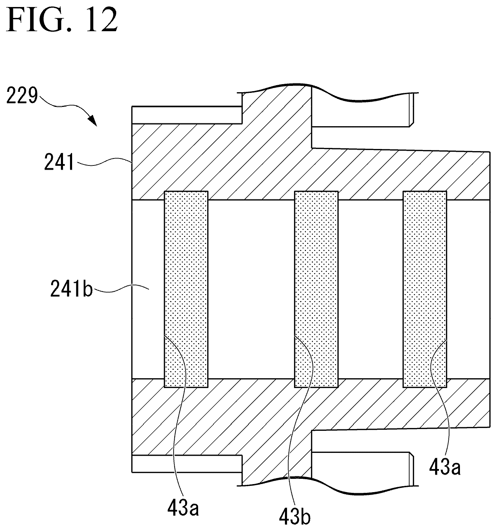

The following describes a second embodiment with reference to Figs. 11 and 12 and by referring to Figs. 1 and 2. Elements and components similar to those of the first embodiment are referred to using the same labels or referral numerals and description thereof will be omitted. The first and second embodiments are the same in that the rollator 101 includes a vehicle body 102, a plurality of wheels 103 provided on the lower portion of the vehicle body 102, and an operating unit 104 provided on the upper portion of the vehicle body 102. The first and second embodiments are also the same in that the wheels 103 each include a speed control device 201. The first and second embodiment are also the same in that the speed control device 201 has an axle 2, a planetary gear mechanism 3, a brake drum 11 mounted on the planetary gear mechanism 3, and a centrifugal brake unit 213 accommodated in the brake drum 11. These basic components are also employed in the subsequent embodiments.

Fig. 11 is a perspective view showing a boss plate 229 relating to the second embodiment of the present invention. Fig. 12 is a sectional view along the axial direction showing a boss portion 241, showing a part of the boss portion 241 in an enlarged manner. As shown in Figs. 11 and12, the second embodiment is different from the first embodiment in that the boss portion 241 relating to the second embodiment is differently shaped than the boss portion 41 relating to the first embodiment. Specifically, the inner circumferential surface 241b of the boss portion 241 has two first recesses 43a and one second recess 43b. The recesses 43a and 43b are annularly shaped and extend along the entire inner circumferential surface 241b. The two first recesses 43a are positioned at the respective ends of the boss portion 241that face each other in the axial direction. The second recess 43b is positioned between the two first recesses 43a.

Lubricant (not shown) is applied between the axle 2 and the above-described boss portion 241 to fill the recesses 43a and 43b. The lubricant remains in the recesses 43a and 43b. This enables the boss plate 229 to rotate smoothly with respect to the axle 2.

### <How Boss Plate Works>

The following describes how the boss plate 229 works. The following first describes how the boss plate 229 behaves while the speed control device 201 is in use. When the pad 30 of the brake shoe 23 is pressed against the cylindrical portion 11b of the brake drum 11, this may create abrasion powder. Abrasion powder may also occur when the gears 4a to 5b of the planetary gear mechanism 3 mesh with each other. Abrasion powder and other kinds of foreign matter may enter between the axle 2 and the boss portion 241 of the boss plate 229. If such occurs, the foreign matter impedes the smooth rotation of the boss plate 229 with respect to the axle 2. This may impair the performance of the speed control device 201 or result in abnormal noise during usage of the speed control device 201.

The inner circumferential surface 241b of the boss portion 241 has two first recesses 43a and one second recess 43b. The two first recesses 43a are positioned at the respective ends of the boss portion 241 that face each other in the axial direction. Any foreign matter that has entered between the axle 2 and the boss portion 241 of the boss plate 29 reaches the first recesses 43a and stays there. Thus, the foreign matter can be prevented from moving beyond the first recesses 43a and deep into the boss portion 241.

If the foreign matter enters the first recesses 43a, the lubricant, which is not shown but originally stays still in the first recesses 43a, may be possibly pushed out of the first recesses 43a. Although not shown, however, the lubricant rests in the second recess 43b that is located between the two first recesses 43a. This ensures that the lubricant (not shown) can remain between the axle 2 and the boss portion 241. Hypothetically, the foreign matter can move beyond the first recesses 43a and deep into the boss portion 241. In this case, the foreign matter enters the second recess 43b and stays there. In this manner, the foreign matter can be prevented from spreading over the entire area between the boss portion 241 and the axle 2.

In the speed control device 201 relating to the second embodiment described above, the inner circumferential surface 241b of the boss portion 241 has two first recesses 43a and one second recess 43b. These recesses 43a and 43b can serve to stop foreign matter from entering between the axle 2 and the boss portion 241. In this manner, the foreign matter can be prevented from spreading over the entire area between the boss portion 241 and the axle 2. As a result, the speed control device 201 can avoid performance degradation and abnormal noise during usage in addition to achieving the same advantageous effects as the first embodiment described above.

The recesses 43a and 43b are annularly shaped and extend along the entire inner circumferential surface 241b. In this manner, the foreign matter can be prevented from entering deep into the boss portion 241 via the recesses 43a and 43b. The lubricant, not shown, can be prevented from flowing out of the recesses 43a and 43b to the outside of the boss portion 241. This ensures that the lubricant (not shown) can remain between the axle 2 and the boss portion 241. As a result, the speed control device 201 can reliably avoid performance degradation and abnormal noise during usage.

The two first recesses 43a are positioned at the respective ends of the boss portion 241 that face each other in the axial direction. This can lead to actively preventing penetration of foreign matter on both sides of the boss portion 241 in the axial direction. Thus, the foreign matter can be prevented from moving deep into the boss portion 241. In addition to the two first recesses 43a, the second recess 43b is positioned between the two first recesses 43a. The first recesses 43a can play an active role in stopping foreign matter while the second recess 43b can actively serve to keep the lubricant, which is not shown, in place. The first and second recesses 43a and 43b can thus have different functions. As a result, the speed control device 201 can more reliably avoid performance degradation and abnormal noise during usage.

The foreign matter that enters between the axle 2 and the boss portion 241 is subjected to the centrifugal force as the boss portion 241 rotates. The recesses 43a and 43b are formed in the inner circumferential surface 241b of the boss portion 241 and thus located closer to the outer circumference (outside in the radial direction) relative to the gap between the axle 2 and the boss portion 241. Under the influence of the centrifugal force, the foreign matter can reliably remain in the recesses 43a and 43b. The lubricant (not shown) between the axle 2 and the boss portion 241 can also reliably remain in the recesses 43a and 43b.

With the speed control device 201 described above, the rollator 101 can avoid performance degradation and abnormal noise during usage.

According to the second embodiment described above, the inner circumferential surface 241b of the boss portion 241 has two first recesses 43a and one second recess 43b. According to the foregoing description, the recesses 43a and 43b are annularly shaped and extend along the entire inner circumferential surface 241b. The present invention, however, is not limited to such. The number and shape of the recesses are not limited to the above. The recesses can have any other shapes.

The recesses preferably extend in the circumferential direction along the entire circumference. For example, the recesses 43a and 43b may be replaced by a spiral recess along the inner circumferential surface 241b. At least one recess should be formed. A single recess can still serve to contain foreign matter entering between the axle 2 and the boss portion 241. Alternatively, the recesses 43a and 43b may be formed in the outer circumferential surface 2a of the axle 2, more specifically, the supported outer circumferential surface 2b that is supported by the boss portion 241. In this alternative case, the recesses can still serve to contain foreign matter entering between the axle 2 and the boss portion 41.

### [Third Embodiment]

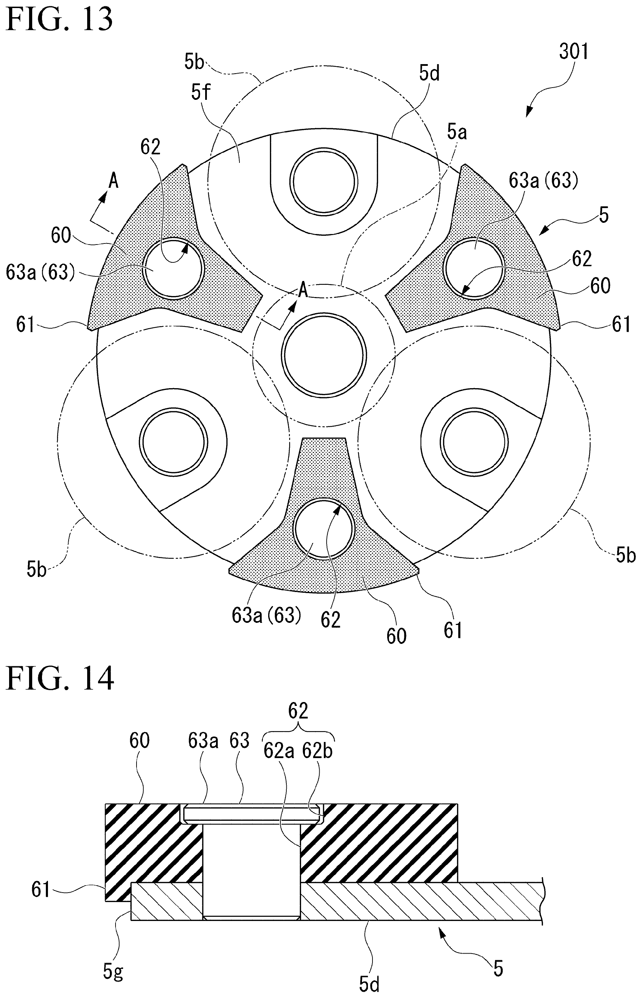

The following now describes a third embodiment with reference to Figs. 13 and 14. Fig. 13 is a plan view of a carrier plate 5d relating to a third embodiment, viewed from the outside in the vehicle width direction. Fig. 14 is a sectional view along the line A-A in Fig. 13. As shown in Figs. 13 and 14, a speed control device 301 relating to the third embodiment is different from the speed control device 1 relating to the first embodiment in that dampers 60 are provided in the third embodiment but not in the first embodiment.

The dampers 60 are provided on the outer surface 5f of the carrier plate 5d between the adjacent second planetary gears 5b in the circumferential direction. The dampers 60 are made of, for example, rubber. The dampers 60 are formed in a fan shape as viewed in the vehicle width direction such that its width in the circumferential direction increases toward the outside in the radial direction, in order to avoid contact with the second planetary gears 5b and the second sun gear 5a.

The outer circumferential portion of each damper 60 extends outwardly in the radial direction beyond the outer circumferential portion of the carrier plate 5d as viewed in the vehicle width direction. The outer circumferential portion of the damper 60 has an annular protrusion 61 protruding inwardly in the vehicle width direction that is molded in one piece. The annular protrusion 61 covers part of the outer circumferential surface 5g of the carrier plate 5d.

The damper 60 has a pin insertion hole 62 at the center in the radial direction. The pin insertion hole 62 has a hole 62a, and a counterbored portion 62b that is positioned outside the hole 62a in the vehicle width direction. The counterbored portion 62b is coaxially located with the hole 62a and leads to the hole 62a. Into the pin insertion hole 62, a fixture pin 63 is inserted from outside in the vehicle width direction. The fixture pin 63 is fixedly attached to the carrier plate 5d. In this manner, the damper 60 is fixedly attached to the carrier plate 5d. The fixture pin 63, which is inserted into the pin insertion hole 62, has its head 63a accommodated in the counterbored portion 62b. In this manner, the fixture pin 63 does not stick out of the damper 60.

The third embodiment described above produces the same effects as the first embodiment described above. In addition, having the dampers 60, the speed control device 301 can reduce vibration of the carrier plate 5d and also noise.

In the above third embodiment, the dampers 60 are provided on the outer surface 5f of the carrier plate 5d. In other words, the dampers 60 are provided in the second-stage gear mechanism 5 of the planetary gear mechanism 3. The present embodiment is, however, not limited to such, and the dampers 60 may be alternatively provided in the first-stage gear mechanism 4. Specifically, the dampers 60 may be installed on the bottom wall 117a of the first accommodating recess 117.

In the above third embodiment, the dampers 60 are fixedly attached to the carrier plate 5d using the fixture pins 63. The present embodiment is, however, not limited to such, and any other manners can be adopted as long as the dampers 60 are fixedly attached to the carrier plate 5d. For example, the dampers 60 may be fixedly attached to the carrier plate 5d using adhesives or bolts instead of the fixture pins 63.

In the above third embodiment, the rubber dampers 60 are provided to reduce the vibration of the carrier plate 5d and noise. The present embodiment is, however, not limited to such, and any other manners can be adopted as long as the dampers 60 can reduce the vibration of the carrier plate 5d and noise. For example, the dampers 60 may be formed of resin, instead of rubber.

### [Fourth Embodiment]

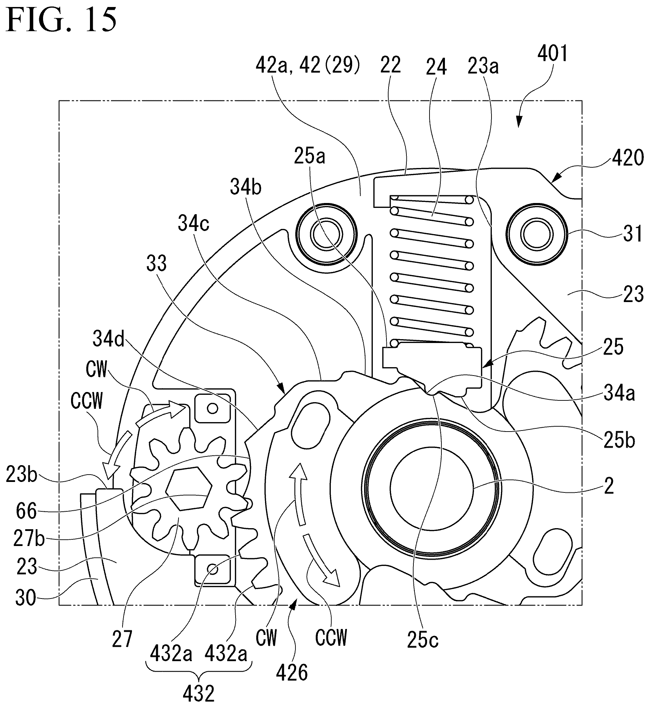

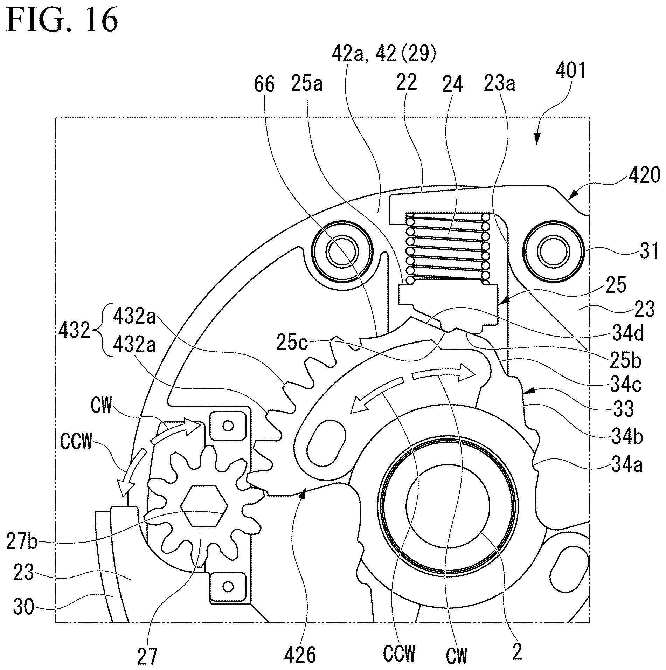

The following now describes a fourth embodiment with reference to Figs. 15 and 16. Fig. 15 is a plan view of a brake mechanism 420 of a centrifugal brake unit 413 relating to the fourth embodiment during first-stage braking, viewed from the outside in the vehicle width direction. Fig. 15 corresponds to Fig. 3 referred to in the above. As shown in Fig. 15, a speed control device 401 relating to the fourth embodiment is different from the speed control device 1 relating to the first embodiment in that a shift cam 426 relating to the fourth embodiment has a different shape than the shift cam 26 relating to the first embodiment. More specifically, the number of teeth 432a of a meshing portion 432 relating to the fourth embodiment is different from the number of teeth 32a of the meshing portion 32 relating to the first embodiment.

In other words, the meshing portion 432 relating to the fourth embodiment has no teeth 432a at sites corresponding to the respective ends of the teeth 32a (see Fig. 3) relating to the first embodiment in the circumferential direction. The meshing portion 432 has a recess 66 at one of the sites without the teeth 432a that is frontward in the clockwise CW direction. The recess 66 is shaped such that the meshing portion 432 extends along the tooth tip circle of the adjustment gear 27 when the shift cam 426 is at a certain position in the rotational direction to implement the first-stage braking. Specifically, when the shift cam 426 is at a certain position in the rotational direction to implement the first-stage braking, the teeth 432a of the meshing portion 432 are not engaged with the teeth 27a of the adjustment gear 27. The adjustment gear 27 idles above the recess 66.

Fig. 16 is a plan view of the brake mechanism 420 of the centrifugal brake unit 413 relating to the fourth embodiment in the fourth-stage braking, viewed from the outside in the vehicle width direction. Fig. 16 corresponds to Fig. 3 referred to in the above. As shown in Fig. 16, the same is true when the shift cam 426 is at a certain position in the rotational direction to implement the fourth-stage braking as when the shift cam 426 is at a certain position in the rotational direction to implement the first-stage braking. Specifically, when the shift cam 426 is at a certain position in the rotational direction to implement the fourth-stage braking, the teeth 432a of the meshing portion 432 are not engaged with the teeth 27a of the adjustment gear 27. The adjustment gear 27 idles above the side surface of the teeth 432a in the circumferential direction. Hereinafter, this idling is referred to simply as "idling above the side surface of the teeth 432a".

### <How Shift Cam Works>

The following describes how the shift cam 426 works. As shown in Figs. 15 and 16, the adjustment gear 27 may be rotated counterclockwise CCW, which results in rotating the shift cam 426 clockwise CW. In this manner, the brake stages increase from the first toward the fourth in the brake mechanism 420. Conversely, the adjustment gear 27 may be rotated clockwise CW, causing the shift cam 426 to rotate counterclockwise CCW. In this case, the brake stages drop from the fourth to the first in the brake mechanism 420.

As shown in Fig. 15, the user may inadvertently rotate the adjustment gear 27 further clockwise CW when the shift cam 426 is at a certain position in the rotational direction to implement the first-stage braking. If such occurs, the adjustment gear 27 idles above the recess 66. The shift cam 426 can be thus prevented from rotating counterclockwise CCW more than necessary. This can prevent, for example, undesired contact between the shift cam 426 and the support portion 25.

As shown in Fig. 16, the user may inadvertently rotate the adjustment gear 27 further counterclockwise CCW when the shift cam 426 is at a certain position in the rotational direction to implement the fourth-stage braking. If such occurs, the adjustment gear 27 idles above the side surface of the teeth 432a. This prevents the shift cam 426 from rotating clockwise CW more than necessary. This can prevent, for example, the support portion 25 from moving beyond the fourth step 34d to touch the teeth 432a.

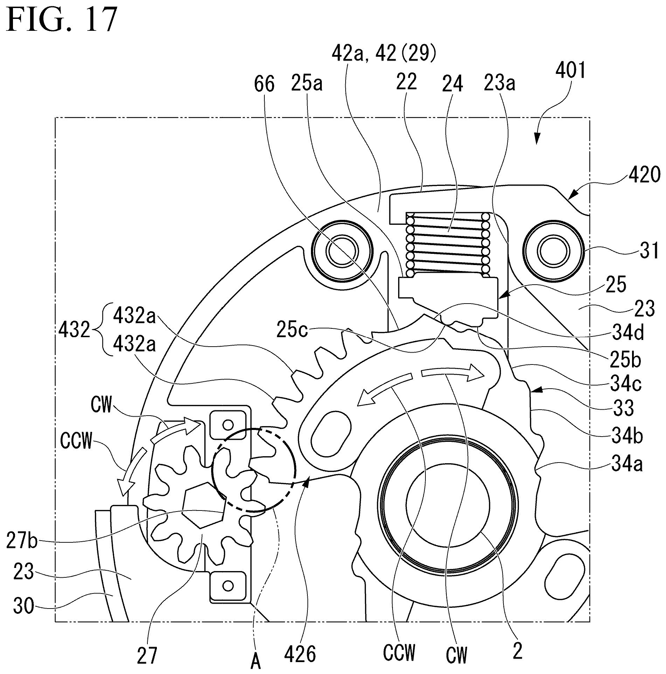

Fig. 17 illustrates how the shift cam 426 behaves when the adjustment gear 27 idles above the side surface of the teeth 432a. Fig. 17 corresponds to Fig. 16 referred to in the above. As shown in Fig. 17, when the adjustment gear 27 idles above the side surface of the teeth 432a, the teeth 27a of the adjustment gear 27 pass one by one above the side surface of the teeth 432a. The teeth 27a of the adjustment gear 27 may slightly push the teeth 432a of the shift cam 426 (see the part A in Fig. 17), causing the shift cam 426 to rotate slightly in the clockwise CW direction.

The support portion 25 is elastically pressed by the compression coil spring 24 against the cam portion 33 of the shift cam 426. Therefore, if the shift cam 426 rotates slightly in the clockwise CW direction, the compression coil spring 24 pushes the shift cam 426 back into its original position. Repeating this motion constitutes a ratchet action. In other words, the brake mechanism 420 relating to the fourth embodiment has a ratchet mechanism 67.

The fourth embodiment described above can thus prevent the user's misuse from damaging the brake mechanism 420.

In the first and fourth embodiments described above, the support portion 25, which is provided between the compression coil spring 24 and the shift cam 26, 426, has the spring seat 25a and the two support protrusions 25b and 25c protruding from the spring seat 25a, which are molded in one piece. The embodiments, however, are not limited to such, and the support portion 25 can take any shape as long as it can be positioned to implement each of the first- to fourth-stage braking states. For example, the support portion 25 may alternatively have a spherical shape.

In the first to fourth embodiments described above, the shift cam 26, which can rotate about the axle 2, is described as a shift portion configured to displace the support portion 25 in such a direction as to compress the compression coil spring 24. The embodiments, however, are not limited to such, and the shift portion may be configured in any other manner as long as it can shift the support portion 25 in such a direction as to compress the compression coil spring 24. For example, the shift portion may be configured to directly shift the support portion 25. As other examples, the shift portion may be configured in the following manner.

### [Fifth Embodiment]

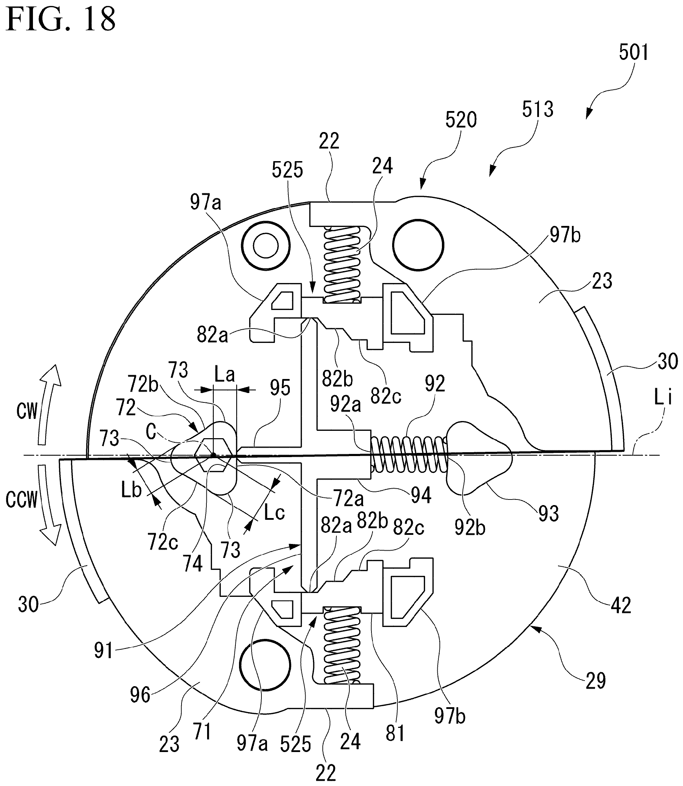

The following now describes a fifth embodiment with reference to Fig. 18. Fig. 18 is a plan view of a brake mechanism 520 of a centrifugal brake unit 513 relating to the fifth embodiment, viewed from the outside in the vehicle width direction. As shown in Fig. 18, a speed control device 501 relating to the fifth embodiment is different from the speed control device 1 relating to the first embodiment in that a shift unit 71 is provided in the fifth embodiment in place of the shift cam 26 in the first embodiment and that an adjustment roller 72 is provided in place of the adjustment gears 27 in the first embodiment. Accordingly, the shape of the two support portions 525 relating to the fifth embodiment differs from that of the two support portions 25 relating to the first embodiment.

The shift unit 71 has a slide block 91, a compression coil spring 92 having its first end 92a connected to the slide block 91, and a spring seat 93 connected to a second end 92b of the compression coil spring 92 that is opposite the first end 92a. The slide block 91 passes through the central axis of the axle 2 (not shown in Fig. 18) as viewed in the vehicle width direction, and is symmetrical about a straight line Li that is orthogonal to the direction in which the two support portions 525 face. Specifically, the slide block 91 has a rod-shaped shift lever 96 extending in the direction in which the two support portions 525 face, and also has a shift-side spring seat 94 and a contact pin 95 that are molded in one piece with the shift lever 96 at the length-wise middle of the shift lever 96. The shift-side spring seat 94 and the contact pin 95 sandwich the shift lever 96.

The first end 92a of the compression coil spring 92 is connected to the shift-side spring seat 94. The central axis of the compression coil spring 92 coincides with the straight line Li. The spring seat 93, which is connected to the second end 92b of the compression coil spring 92, is fixedly attached to the plate portion 42 of the boss plate 29. The compression coil spring 92 remains slightly compressed between the spring seat 93 and the shift-side spring seat 94.

The adjustment roller 72 is positioned on the straight line Li so as to face the end of the contact pin 95 of the slide block 91. The adjustment roller 72 is shaped like an equilateral triangle when viewed in the vehicle width direction. The three apexes of the adjustment roller 72 respectively have round chamfered portions 73. The round chamfered portions 73 have an arc shape when viewed in the vehicle width direction.

The adjustment roller 72 is rotatably supported by the plate portion 42. The rotation axis C of the adjustment roller 72 is shifted from the center of the adjustment roller 72. Therefore, the distances La, Lb, and Lc (a first distance La, a second distance Lb, and a third distance Lc) between the three sides 72a, 72b, 72c (a first side 72a, a second side 72b, and a third side 72c) of the adjustment roller 72 and the rotation axis C are all different. Specifically, the second distance Lb between the second side 72b and the rotation axis C is greater than the first distance La between the first side 72a and the rotation axis C. The third distance Lc between the third side 72c and the rotation axis C is greater than the second distance Lb. The adjustment roller 72 also has an engagement recess 74 that is arranged coaxially with the rotation axis C and in an outer portion of the adjustment roller 72 in the vehicle width direction. The engagement recess 74 can receive an end of a tool (not shown) such as a hexagonal wrench.

As the adjustment roller 72 is configured as described above, the contact pin 95 of the slide block 91 butts up against one of the three sides 72a, 72b, or 72c of the adjustment roller 72. The slide block 91 is elastically biased by the compression coil spring 92 toward the adjustment roller 72. Therefore, the contact pin 95 always butt against one of the sides 72a, 72b, 72c of the adjustment roller 72. With the contact pin 95 being in this state, the adjustment roller 72 may be rotated, causing the slide block 91 to slide along the straight line Li to an extent determined by the respective distances La, Lb, and Lc.

In the following description, a first rotational position of the adjustment roller 72 represents the rotational position where the contact pin 95 butts up against the first side 72a. A second rotational position of the adjustment roller 72 denotes the rotational position where the contact pin 95 butts up against the second side 72b. A third rotational position of the adjustment roller 72 denotes the rotational position where the contact pin 95 butts up against the third side 72c.

The two support portions 525 are symmetrical about the straight line Li. Therefore, the following description only focuses on one of the two support portions 525. The other support portion 525 is referred using the same reference numerals and not specifically described herein. The other support portion 525 will be described as necessary.

The two support portions 525 each have a support body 81, and two guide portions 97a and 97b that are configured to guide the support body 81 at its sides facing each other in the circumferential direction. The support body 81 is a rectangular block that extends in a direction that is orthogonal to the mutually opposing directions as viewed in the vehicle width direction. The support body 81 has a cam portion 82 at the side facing the other support portion 525. The cam portion 82 has a plurality of (for example, three in the fifth embodiment) steps 82a, 82b, 82c (a first step 82a, a second step 82b, a third step 82c) that are at different distances from the axle 2.

The first step 82a of each of the two support portions 525 is closest to the adjustment roller 72. The second step 82b is positioned next to the first step 82a so as to be closer to the spring seat 93 than is the first step 82a. The second step 82b is closer to the axle 2 than is the first step 82a. The third step 82c is positioned next to the second step 82b so as to be closer to the spring seat 93. The third step 82c is closer to the axle 2 than is the second step 82b. The shift lever 96 is constantly in contact with any one of the steps 82a to 82c as the compression coil spring 24 is provided between the support portion 525 and the spring seat 22 of the brake shoe 23.

The two guide portions 97a and 97b allow the support body 81 to slide in the mutually opposing directions. In other words, the two guide portions 97a and 97b cause the support body 81 to slide in such a direction that the support body 81 moves toward or away from the spring seat 22 of the brake shoe 23.

With the components being configured as described above, the adjustment roller 72 may be rotated to the first rotational position. In this case, the slide block 91 is at its closest position to the adjustment roller 72 as the first distance La is the shortest among the three distances La to Lc. In this state, the shift lever 96 is butted against the first step 82a of the support portion 525. This state corresponds to the first-stage braking described above.

The adjustment roller 72 may be then rotated, for example, in the clockwise CW direction in Fig. 18 to reach the second rotational position. In this state, the shift lever 96 is butted against the second step 82b of the support portion 525 as the second distance Lb is greater than the first distance La. This state corresponds to the second-stage braking described above. The adjustment roller 72 may be further rotated in the clockwise CW direction in Fig. 18 to reach the third rotational position. In this state, the shift lever 96 is butted against the third step 82c of the support portion 525 as the third distance Lc is greater than the second distance Lb. This state corresponds to the third-stage braking described above.

The adjustment roller 72 may be further rotated in the clockwise CW direction in Fig. 18 and return to the first rotational position, which implements the first-stage braking. The adjustment roller 72 may be rotated counterclockwise CCW in Fig. 18 from the third rotational position. In this case, the adjustment roller 72 may return to the second rotational position, which implements the second-stage braking. In the same manner, the adjustment roller 72 can be rotated from the first rotational position to the second or third rotational position by a single operation, depending on which direction the adjustment roller 72 is rotated. The adjustment roller 72 can be rotated from the second rotational position to the first or third rotational position by a single operation, depending on which direction the adjustment roller 72 is rotated.

The above-described fifth embodiment can produce the same advantageous effects as does the first embodiment. In addition, a swift transition between the first-stage braking, the second-stage braking, and the third-stage braking can be accomplished by rotating the adjustment roller 72 in a particular direction. The centrifugal brake unit 513 can be thus even more convenient.

According to the above-described fifth embodiment, the slide block 91 has the rod-shaped shift lever 96 extending in the direction in which the two support portions 525 face, and also has the shift-side spring seat 94 and contact pin 95 that are molded in one piece with the shift lever 96 at the length-wise middle of the shift lever 96. The fifth embodiment, however, is not limited to such, and the slide block 91 can be configured in any other manner as long as it can slide along the straight line Li to an extent determined by the respective distances La, Lb, and Lc upon rotation of the adjustment roller 72. It is only required that the sliding movement changes the step against which the shift lever 96 butts up between the steps 82a to 82c.

The embodiments described herein are not intended to necessarily limit the present invention to any specific embodiments. Various modifications can be made to these embodiments without departing from the true scope and spirit of the present invention. For example, the vehicle described in the above-described embodiments is the rollator 101 that assists the user in walking. The present invention, however, is not limited to such. The vehicle can be configured in any manner as long as it includes the vehicle body 102 and the wheels 103 rotatably supported on the vehicle body 102. For example, the vehicle can also be, for example, a cart to be pushed by a person for transporting luggage or a buggy for carrying an infant.

The foregoing embodiments disclosed herein describe a plurality of physically separate constituent parts. They may be combined into a single part, and any one of them may be divided into a plurality of physically separate constituent parts. Irrespective of whether or not the constituent parts are integrated, they are acceptable as long as they are configured to attain the object of the invention.

### LIST OF REFERENCE NUMBERS

1, 201, 301, 401, 501 speed control device
2 axle (shaft, rotation axis)
11 brake drum
11b cylindrical portion (tubular portion)
22 spring seat
22a contact surface
23 brake shoe
24 compression coil spring (compression spring)
25 support portion
25d limiting protrusion (limiting portion, protrusion)
25e support surface
26, 426 shift cam (shift portion, cam)
27 adjustment gear (adjusting unit)
30 pad
31 support shaft (swing axis)
51 limiting protrusion (limiting portion, protrusion)
52 limiting engagement portion (limiting portion, protrusion)
53 gear-side pawl (limiting portion, protrusion)
54 brake-side pawl (limiting portion, protrusion)
102 vehicle body
103 wheel (rotating body)

## Claims

1. A speed control device (1, 201, 301, 401, 501) for controlling rotation speed of a rotating body (103) rotatably supported by a shaft (2), the speed control device (1, 201, 301, 401, 501) comprising:
a brake drum (11) integrated with the shaft (2), the brake drum (11) having a tubular portion (11b);
a brake shoe (23) configured to be displaced and brought into contact with an inner circumferential surface of the tubular portion (11b) when acted upon by centrifugal force resulting from rotation of the rotating body (103); and
a limiting portion (25d, 51, 52, 53, 54) configured to limit displacement of the brake shoe (23),
wherein the brake shoe (23) controls rotation of the rotating body (103).

2. The speed control device (1, 201, 301, 401, 501) of claim 1, comprising:
a compression spring (24) in contact with the brake shoe (23);
a support portion (25) provided on the compression spring (24) on an opposite side to the brake shoe (23), the support portion (25) supporting the compression spring (24); and
a shift portion (26, 426) configured to displace the support portion (25) in such a direction that the compression spring (24) is compressed in order to reduce a pressing force applied by the brake shoe (23) to the tubular portion (11b), the shift portion (26, 426) being configured to displace the support portion (25) in such a direction that the compression spring (24) is elongated,
wherein the compression spring (24) controls a displacement of the brake shoe (23) by applying an elastic force to the brake shoe (23),
wherein the shift portion (26, 426) increases a pressing force applied by the brake shoe (23) to the tubular portion (11b),
wherein the limiting portion (25d) includes a protrusion (25d) protruding from the support portion (25) toward the brake shoe (23), the support portion (25) and the brake shoe (23) opposing each other with the compression spring (24) being sandwiched therebetween, and
wherein the protrusion (25d) contacts the brake shoe (23) and prevents displacement of the brake shoe (23) if a displacement of the support portion (25) in the direction in which the compression spring (24) is compressed reaches a certain quantity.

3. The speed control device (1, 201, 301, 401, 501) of claim 1, comprising:
a compression spring (24) in contact with the brake shoe (23);
a support portion (25) provided on the compression spring (24) on an opposite side to the brake shoe (23), the support portion (25) supporting the compression spring (24); and
a shift portion (26, 426) configured to displace the support portion (25) in such a direction that the compression spring (24) is compressed in order to reduce a pressing force applied by the brake shoe (23) to the tubular portion (11b), the shift portion (26, 426) being configured to displace the support portion (25) in such a direction that the compression spring (24) is elongated,
wherein the compression spring (24) controls a displacement of the brake shoe (23) by applying an elastic force to the brake shoe (23),
wherein the shift portion (26, 426) increases a pressing force applied by the brake shoe (23) to the tubular portion (11b),
wherein the limiting portion (25d) includes a protrusion (25d) protruding from the brake shoe (23) toward the support portion (25), the support portion (25) and the brake shoe (23) opposing each other with the compression spring (24) being sandwiched therebetween, and
wherein the protrusion (25d) contacts the support portion (25) and prevents displacement of the brake shoe (23) if a displacement of the support portion (25) in the direction in which the compression spring (24) is compressed reaches a certain quantity.

4. The speed control device (1, 201, 301, 401, 501) of claim 1, comprising:
a compression spring (24) in contact with the brake shoe (23);
a support portion (25) provided on the compression spring (24) on an opposite side to the brake shoe (23), the support portion (25) supporting the compression spring (24); and
a shift portion (26, 426) configured to displace the support portion (25) in such a direction that the compression spring (24) is compressed in order to reduce a pressing force applied by the brake shoe (23) to the tubular portion (11b), the shift portion (26, 426) being configured to displace the support portion (25) in such a direction that the compression spring (24) is elongated,
wherein the compression spring (24) controls a displacement of the brake shoe (23) by applying an elastic force to the brake shoe (23),
wherein the shift portion (26, 426) increases a pressing force applied by the brake shoe (23) to the tubular portion (11b),
wherein the limiting portion (51) includes a protrusion (51) provided on the shift portion (26, 426), and
wherein the protrusion contacts the brake shoe (23) and prevents displacement of the brake shoe (23) if the shift portion (26, 426) is operated such that a displacement of the support portion (25) in the direction in which the compression spring (24) is compressed reaches a certain quantity.

5. The speed control device (1, 201, 301, 401, 501) of claim 4,
wherein the shift portion (26, 426) includes a cam configured to rotate about an axis of rotation of the rotating body (103), the cam having the support portion (25) arranged on an outer circumferential surface thereof, and
wherein the cam has the protrusion (51).

6. The speed control device (1, 201, 301, 401, 501) of claim 4,
wherein the shift portion (26, 426) includes:
a cam configured to rotate about an axis of rotation of the rotating body (103), the cam having the support portion (25) arranged on an outer circumferential surface thereof; and
an adjusting unit (27) configured to rotate about a different axis of rotation parallel to the axis of rotation of the rotating body (103), the adjusting unit (27) being configured to adjust a rotational position of the cam,
wherein the adjusting unit (27) has the protrusion (52, 53).

7. The speed control device (1, 201, 301, 401, 501) of claim 1, wherein the rotating body (103) includes a wheel on a vehicle body of a rolling walker.

8. A vehicle (101) comprising:
a vehicle body (102);
a wheel (103) rotatably supported by an axle (2) of the vehicle body (102); and
a speed control device (1, 201, 301, 401, 501) for controlling rotation speed of the wheel (103),
wherein the speed control device (1, 201, 301, 401, 501) includes:
a brake drum (11) integrated with the axle (2), the brake drum (11) having a tubular portion (11b);
a brake shoe (23) configured to be displaced and brought into contact with an inner circumferential surface of the tubular portion (11b) when acted upon by centrifugal force resulting from rotation of the wheel (103); and
a limiting portion (25d, 51, 52, 53, 54) configured to limit displacement of the brake shoe (23), and
wherein the brake shoe (23) controls rotation of the wheel (103).
